# EUROPEAN PATENT APPLICATION

(11) **EP 4 415 408 A1**
(43) Date of publication of application: **14.08.2024**
(21) Application number: 22877953.4
(22) Date of filing: 08.10.2022
(51) Int. Cl.: H04W 12/06, H04W 12/71

(54) **INFORMATION PROCESSING METHOD AND APPARATUS, AND COMMUNICATION DEVICE AND READABLE STORAGE MEDIUM**

(30) Priority: 09.10.2021 CN 202111178135; 15.10.2021 CN 202111204561
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Lavoix
(86) International application number: PCT/CN2022/123816
(87) International publication number: WO 2023/056937

(57) **Abstract**

This application discloses an information processing method and apparatus, a communication device, and a readable storage medium, and pertains to the field of communication technologies. The information processing method in embodiments of this application includes: performing, by a terminal, a related operation for activating and/or deactivating subscriber data based on the number of device identities of the terminal.

## Description

### CROSS-REFERENCE TO RELATED APPLICATIONS

This application claims priority to Chinese Patent Application No. 202111178135.3 filed in China on October 9, 2021, and Chinese Patent Application No. 202111204561.X filed in China on October 15, 2021, which is incorporated herein by reference in its entirety.

### TECHNICAL FIELD

This application belongs to the field of communication technology and specifically relates to an information processing method and apparatus, a communication device, and a readable storage medium.

### BACKGROUND

In existing networks, existing terminal device identities are pre-configured on terminals. An international mobile equipment identity (International Mobile Equipment Identity, IMEI) is pre-configured on the universal subscriber identity module (Universal Subscriber Identity Module, USIM) card slot. After being inserted, the USIM automatically binds to a terminal device identity corresponding to the card slot. Existing networks may initiate device identity verification of terminals during registration to prevent illegal terminals from accessing the network via an operator's USIM. In private network scenarios, a terminal may have multiple certificates and/or multiple pieces of subscription data. However, the number of terminal device identities pre-configured on the terminal may be less than the number of certificates and/or subscription data on the terminal, leading to some certificates and/or subscription data without a bound terminal device identity. When using these certificates and/or subscription data to access the network, the terminal cannot pass terminal device identity verification of the network. This problem remains to be solved.

### SUMMARY

Embodiments of this application provide an information processing method and apparatus, a communication device, and a readable storage medium, which can support the network in conducting device identity verification of a terminal while reducing the waste of device identities.

According to a first aspect, an information processing method is provided, including: performing, by a terminal, a related operation for activating and/or deactivating subscriber data based on the number of device identities of the terminal; where
the subscriber data includes at least one of the following: a certificate and subscription data.

According to a second aspect, an information processing method is provided, applied to a network-side device and including: sending first indication information to a terminal, where the first indication information is used for indicating one of the following: a need for device identity verification of the terminal; and no need for device identity verification of the terminal.

According to a third aspect, an information processing apparatus is provided, including: a first execution module configured to perform activating and/or deactivating subscriber data based on the number of device identities of a terminal; where
the subscriber data includes at least one of the following: a certificate and subscription data.

According to a fourth aspect, an information processing apparatus is provided, including: a first sending module, where the first indication information is used for indicating one of the following: a need for device identity verification of the terminal; and no need for device identity verification of the terminal.

According to a fifth aspect, an information processing method is provided, including: performing, by a terminal, a first operation upon determination that a second condition is satisfied; where the first operation includes at least one of the following: binding a device identity to first subscriber data, and sending the device identity to a first network; where
the second condition includes at least one of the following: the first subscriber data is subscriber data activated on the terminal, the terminal uses the first subscriber data to access the first network, the first network requires device identity verification of the terminal, the device identity is a valid terminal device identity in the first network, and
the device identity is a device identity bound to the first subscriber data; and
the subscriber data includes at least one of the following: a certificate and subscription data.

According to a sixth aspect, an information processing method is provided, including: performing, by a terminal, a second operation upon determination that a third condition is satisfied, where the second operation includes at least one of the following:
setting a first device identity as an invalid device identity for a first network;
not binding a first device identity to first subscriber data;
prohibiting the use of the first subscriber data to access the first network in a case that the first device identity is bound to the first subscriber data;
deactivating the first subscriber data for a scenario involving residence and/or access to the first network in a case that the first device identity is bound to the first subscriber data;
releasing the binding of the first device identity to the first subscriber data in a case that the first device identity is already bound to the first subscriber data;
binding a second device identity to the first subscriber data; and
binding a device identity to the first subscriber data in a case that no device identity is bound to the first subscriber data; where
the third condition includes one of the following: receiving first information from the first network, and determining that the first device identity is not a valid device identity for the first network; where
the first information is used for indicating at least one of the following: the terminal device is invalid, and the device identity of the terminal is invalid; and
the subscriber data includes at least one of the following: a certificate and subscription data.

According to a seventh aspect, an information processing apparatus is provided, where the apparatus includes a second execution module.

The second execution module is configured for a terminal to perform a first operation upon determination that a second condition is satisfied; where the first operation includes at least one of the following: binding a device identity to first subscriber data, and sending the device identity to a first network; where the second condition includes at least one of the following: the first subscriber data is subscriber data activated on the terminal, the terminal uses the first subscriber data to access the first network, the first network requires device identity verification of the terminal, the device identity is a valid terminal device identity in the first network, and the device identity is a device identity bound to the first subscriber data; and the subscriber data includes at least one of the following: a certificate and subscription data.

According to an eighth aspect, an information processing apparatus is provided. The apparatus includes a third execution module; and the third execution module is configured for a terminal to perform a second operation upon determination that a third condition is satisfied, where the second operation includes at least one of the following:
setting a first device identity as an invalid device identity for a first network;
not binding a first device identity to first subscriber data;
prohibiting the use of the first subscriber data to access the first network in a case that the first device identity is bound to the first subscriber data;
deactivating the first subscriber data for a scenario involving residence and/or access to the first network in a case that the first device identity is bound to the first subscriber data;
releasing the binding of the first device identity to the first subscriber data in a case that the first device identity is already bound to the first subscriber data;
binding a second device identity to the first subscriber data; and
binding a device identity to the first subscriber data in a case that no device identity is bound to the first subscriber data; where
the third condition includes one of the following: receiving first information from the first network, and determining that the first device identity is not a valid device identity for the first network; where
the first information is used for indicating at least one of the following: the terminal device is invalid, and the device identity of the terminal is invalid; and
the subscriber data includes at least one of the following: a certificate and subscription data.

According to a ninth aspect, a terminal is provided, including a processor, a memory, and a program or instructions stored in the memory and capable of running on the processor. When the program or instructions are executed by the processor, the steps of the information processing method according to the first aspect are implemented, or the steps of the information processing method according to the fifth aspect are implemented, or the steps of the information processing method according to the sixth aspect are implemented.

According to a tenth aspect, a network-side device is provided, including a processor, a memory, and a program or instructions stored in the memory and capable of running on the processor. When the program or instructions are executed by the processor, the steps of the information processing method according to the second aspect are implemented.

According to an eleventh aspect, a readable storage medium is provided. The readable storage medium stores a program or instructions, and when the program or the instructions are executed by a processor, the steps of the method according to the first aspect are implemented, or the steps of the method according to the second aspect are implemented, or the steps of the method according to the fifth aspect are implemented, or the steps of the method according to the sixth aspect are implemented.

According to a twelfth aspect, a chip is provided. The chip includes a processor and a communication interface, the communication interface is coupled to the processor, and the processor is configured to run a program or instructions to implement the steps of the method according to the first aspect, or the steps of the method according to the second aspect, or the steps of the method according to the fifth aspect, or the steps of the method according to the sixth aspect are implemented.

According to a thirteenth aspect, a computer program product is provided. The computer program product is stored in a non-transitory storage medium, and the computer program product is executed by at least one processor to implement the steps of the processing method according to the first aspect or the second aspect, or the steps of the method according to the second aspect, or the steps of the method according to the fifth aspect, or the steps of the method according to the sixth aspect are implemented.

According to a fourteenth aspect, a communication device is provided and configured to execute the steps of the method according to the first aspect, or the steps of the method according to the second aspect, or the steps of the method according to the fifth aspect, or the steps of the method according to the sixth aspect.

In the embodiments of this application, in a case that a terminal needs to be assigned a new temporary terminal identity, or a terminal needs to change its temporary terminal identity, a first message is sent to the network. This minimizes the impact on the network while reducing paging conflicts.

### BRIEF DESCRIPTION OF DRAWINGS

FIG. 1 is a block diagram of a wireless communication system to which embodiments of this application are applicable;
FIG. 2 is a schematic flowchart of an information processing method according to an embodiment of this application;
FIG. 3 is a schematic flowchart of another information processing method according to an embodiment of this application;
FIG. 3A is a schematic flowchart of another information processing method according to an embodiment of this application;
FIG. 3B is a schematic flowchart of another information processing method according to an embodiment of this application;
FIG. 4 is a schematic structural diagram of a registration process according to Example 1 of this application;
FIG. 5 is a schematic structural diagram of an information processing apparatus according to an embodiment of this application;
FIG. 6 is a schematic structural diagram of another information processing apparatus according to an embodiment of this application;
FIG. 6A is a schematic structural diagram of another information processing apparatus according to an embodiment of this application;
FIG. 6B is a schematic structural diagram of another information processing apparatus according to an embodiment of this application;
FIG. 7 is a structural diagram of another communication device according to an embodiment of this application;
FIG. 8 is a schematic diagram of a hardware structure of a terminal according to an embodiment of this application; and
FIG. 9 is a schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type and do not limit the quantity of objects. For example, there may be one or a plurality of first objects. In addition, "and/or" in the specification and claims represents at least one of connected objects, and the character "/" generally indicates that the contextually associated objects have an "or" relationship.

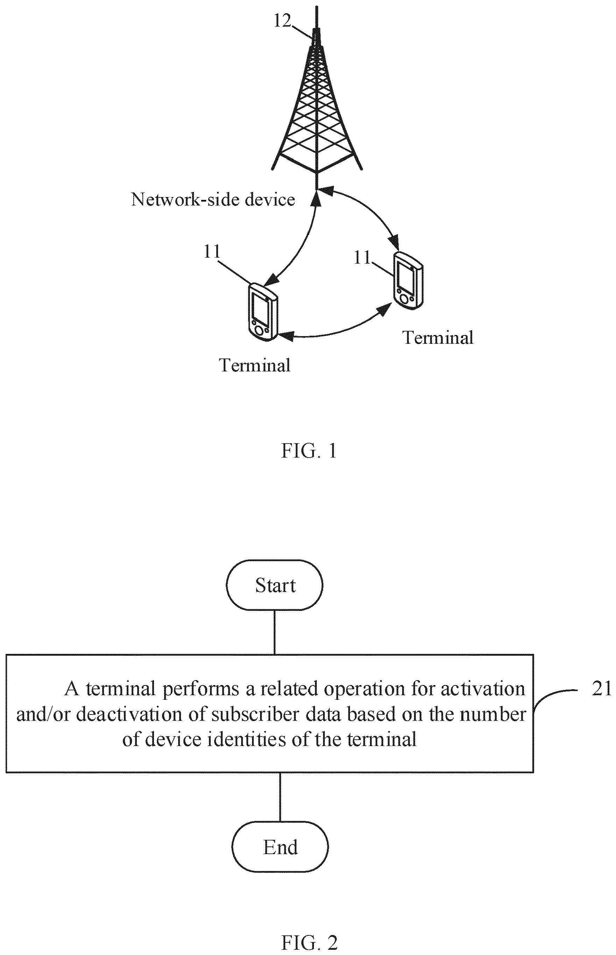

FIG. 1 is a block diagram of a wireless communication system to which embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a wrist band, earphones, glasses, or the like. It should be noted that the terminal 11 is not limited to any specific type in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a wireless local area network (Wireless Local Area Network, WLAN) access point, a wireless fidelity (Wireless Fidelity, WiFi) node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the new radio (new radio, NR) system is used as an example, although the specific type of the base station is not limited.

In an optional embodiment of this application, "able to" may represent at least one of the following: permitted, supported, inclined, or having a priority capability. "Unable to" may represent at least one of the following: not permitted, not supported, not inclined, or not having the capability.

In an optional embodiment of this application, "obtaining" or "acquiring" can be understood as getting from configuration, receiving, receiving after a request, acquiring through self-learning, deducing based on un-received information, or acquiring based on processed received information. The specifics can be determined according to actual needs, and this embodiment of the application does not limit this. For example, when specific capability indication information transmitted by a device is not received, it can be deduced that the device does not support the capability.

In an optional embodiment of this application, sending can include broadcasting, broadcasting within system messages, or returning after a request response.

In an optional embodiment of this application, "individually" and "independently" can represent the same meaning and can be used interchangeably.

In an optional embodiment of this application, the communication device may include at least one of the following: a network-side device (including a communication network element) and a terminal.

In an optional embodiment of this application, the communication network element may include at least one of the following: a core network network element and a radio access network network element.

In an optional embodiment of this application, a core network (Core Network, CN) network element can embody one of the following: core-network network device, core-network communication device, core-network node, core-network function, or core-network unit. The core-network element, the core-network device, the core-network communication device, the core-network node, the core-network function and/or core-network unit may include, but is not limited to, at least one of the following: a mobility management entity (Mobility Management Entity, MME), an access management function (Access Management Function, AMF), a session management function (Session Management Function, SMF), a user plane function (User Plane Function, UPF), a serving gateway (serving GW, SGW), a public data network (Public Data Network, PDN) gateway, a policy control function (Policy Control Function, PCF), a policy and charging rules function (Policy and Charging Rules Function, PCRF), a serving general packet radio service (General Packet Radio Service, GPRS) support node (Serving GPRS Support Node, SGSN), a gateway GPRS support node (Gateway GPRS Support Node, GGSN), unified data management (Unified Data Management, UDM), Unified Data Repository (Unified Data Repository, UDR), a home subscriber server (Home Subscriber Server, HSS) and Application Function (Application Function, AF), and equipment identity register (Equipment Identity Register, EIR).

In an optional embodiment of this application, a wireless access network element (CN element) can embody one of the following: radio access network (Radio Access Network, RAN) equipment, a RAN communication device, a RAN node, a RAN function, or a RAN unit. The RAN network element, the RAN device, the RAN communication device, the RAN node and/or the RAN function may include, but is not limited to, at least one of the following: a 3rd generation partnership project (3rd Generation Partnership Project, 3GPP) radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a NodeB (NodeB), a non-3GPP interworking function (Non-3GPP Inter Working Function, N3IWF), an access controller (Access Controller, AC) node, an access point (Access Point, AP) device, or a wireless local area network (Wireless Local Area Networks, WLAN) node, and a non-3GPP interworking function (Non-3GPP InterWorking Function, N3IWF).

In the embodiments of this application, the following issues need to be resolved.

Issue 1: In a case that the number of subscriber data (such as network certificates and/or subscription data) on the terminal exceeds the number of device identities and that the terminal uses some subscriber data to access the network, it may result in the terminal failing the terminal device identity verification by the network. It is conceivable to configure a device identity for each piece of subscriber data. However, the terminal can dynamically download multiple pieces of subscriber data, but the device identities of the terminal are often pre-configured. Therefore, it may still not be possible to satisfy that each piece of subscriber data has a device identity. In addition, the number of subscriber data able to be simultaneously activated on the terminal is limited, such as registering with two networks at the same time. Therefore, configuring a device identity for each piece of subscriber data is a significant waste. One solution is that the terminal can maintain many pieces of subscriber data, but the number of subscriber data that is activated at the same time should not exceed the number of device identities of the terminal. This can support the network in conducting device identity verification for the terminals while reducing the waste of device identities.

Issue 2: For non-universal integrated circuit card (Universal Integrated Circuit Card) type subscriber data, which is stored on the terminal device (such as a virtual card), there is no need to insert or remove a physical card into a slot. Therefore, the binding of device identity to subscriber data can be flexibly established. Some device identities on the terminal may allow roaming, while others may not. In a roaming scenario, even if subscriber data that allows roaming is used, but a device identity that does not allow roaming is used, it may not be possible to access the roaming network. This is because the roaming network may perform device verification and discover that the device identity is illegal, leading to access failure. Therefore, the issue of how to bind subscriber data and device identity still needs to be resolved.

In an optional embodiment of this application, the network is a mobile communication network.

In an optional embodiment of this application, the device identity is equivalent to the terminal device identity.

In an optional embodiment of the present invention, activation can also be referred to as one of the following: valid and enabled. Invalid may represent not enabled or non-existent. In an optional embodiment of the present invention, a deregistered state caused by invalid subscriber data, such as 5GMM-DEREGISTERED.NO-SUPI, indicates that the terminal has no corresponding valid subscriber data (for example, USIM is not available, or subscriber data is not available).

In an optional embodiment of this application, available includes idle.

In an optional embodiment of this application, idle or available device identities include: device identities not bound to subscriber data, and device identities not in a registered state. For example, the terminal can use the device identity of the terminal to initiate an emergency registration. In this case, in an embodiment, even if the device identity is not bound to any subscriber data, the device identity is considered occupied and cannot be bound to subscriber data again. When the device identity is deregistered, the terminal can consider the device identity to be idle again.

In an optional embodiment of the present invention, the subscriber data can be used for at least one of the following: terminal access to the network, network authentication and/or authorization of terminal access, and network identification of the terminal.

In an optional embodiment of the present invention, a network corresponding to the subscriber data is a network to which the terminal is subscribed. For example, if the terminal subscribes to network A, only after obtaining the subscriber data corresponding to network A can the terminal use the subscriber data to access network A and/or other networks that allow roaming.

In an optional embodiment of the present invention, the certificate in the subscriber data is the network certificate of the subscriber. In an embodiment, one piece of subscriber data includes one certificate or one set of certificates.

In an optional embodiment of the present invention, the subscription data in the subscriber data is the subscription information of the subscriber in the subscribed network. The subscription data can be a collection of the subscriber's subscription information for a set of network services. For example, at least one of the following: voice, SMS, and data service traffic.

In an embodiment, one piece of subscriber data includes one terminal subscriber identity. At this time, the terminal subscriber identity can be a permanent terminal subscriber identity (such as subscription permanent identifier, (Subscription Permanent Identifier, SUPI), and IMSI).

In an embodiment, one piece of subscriber data includes one network or one set of networks.

In an embodiment, non-UICC type subscriber data can include at least one of the following: a virtual card, and subscriber data stored on the terminal device. The subscriber data, for example, can be subscriber data of a non-public network.

In an optional embodiment of the present invention, a non-UICC type device identity refers to a device identity dedicated to non-UICC type subscriber data.

In an optional embodiment of the present invention, a UICC type device identity refers to a device identity dedicated to non-UICC type subscriber data.

A terminal device can have at least one of the following device identities: UICC type device identity, and non-UICC type device identity.

In an optional embodiment of the present invention, information about the network includes at least one of the following: network identification, and type of network. The type of network includes at least one of the following: public network (such as public land mobile network (Public Land Mobile Network, PLMN)), and non-public network. The non-public network includes: stand-alone non-public network (such as stand-alone non-public network (Stand-alone Non-Public Network, SNPN)), and integrated non-public network (such as public network integrated non-public network (Public Network Integrated Non-Public Network, PNI NPN)).

Each piece of subscriber data corresponds to one terminal user identity and/or one network. Each set of subscriber data can be used for registration of one terminal user identity.

In an optional embodiment of the present invention, UICC type subscriber data includes subscriber data stored in UICC. The UICC type subscriber data, for example, subscriber data in the form of USIM. UICC type subscriber data can be referred to as USIM.

In an optional embodiment of the present invention, non-UICC type subscriber data includes subscriber data not stored in UICC.

In an optional embodiment of the present invention, one piece of subscriber data can be represented as one USIM, that is, one entry in the list of subscriber data, for example, an entry of the "list of subscriber data" with the SNPN identity of the SNPN.

In an optional embodiment of this application, one subscriber can be understood as one UE, a terminal with multiple subscribers can be represented as multiple UEs. From the network's perspective, one subscriber is one UE. When a terminal accesses the network using multiple pieces of subscriber data, from the network's perspective, the terminal is multiple UEs.

In an optional embodiment of the present invention, the user or subscriber is referred to as a subscriber. Generally, one subscriber can correspond to one certificate, and one subscriber is represented as one UE. It is not difficult to understand that when a terminal device has multiple subscribers, it can be represented as multiple UEs.

In an optional embodiment of the present invention, the terminal user identity can be a user terminal identity (UE identity);

In an optional embodiment of this application, the temporary terminal identity includes: temporary terminal user identity, and temporary UE identity.

In an optional embodiment of this application, the number of subscriber data simultaneously activated by the terminal indicates the number of subscriber data that is simultaneously active (such as in an active state).

In an optional embodiment of this application, activated subscriber data or subscriber data being activated can both indicate subscriber data in an active state.

In an optional embodiment of this application, the meaning of accessing the network includes at least one of the following: residing in the network, selecting the network, and registering on the network. For example, accessing the first network can mean selecting, residing in and/or registering on the first network.

In an optional embodiment of this application, the binding of device identity to subscriber data includes: when the subscriber data is used to access the network, the device identity provided to the network is the device identity bound to the subscriber data.

In an optional embodiment of the present invention, the term "presentation" (such as display) includes presentation through the terminal's man-machine interface (MMI). Optionally, the man-machine interface can be the terminal's display unit, which may include a display panel configured in forms such as a liquid crystal display, organic light-emitting diode, and the like. Optionally, "presentation" can be understood as displaying on the display unit.

The following describes in detail the information processing method provided in the embodiments of this application by using specific embodiments and application scenarios thereof with reference to the accompanying drawings.

Refer to FIG. 2, which is a flowchart of an information processing method according to an embodiment of this application. The method is applied to a terminal (such as UE and ME). As shown in FIG. 2, the method includes the following steps:

Step 21. A terminal performs a related operation for activating and/or deactivating subscriber data based on the number of device identities of the terminal.

The subscriber data includes at least one of the following: a certificate and subscription data.

In an embodiment, the device identity of the terminal is pre-configured in the terminal or obtained from the terminal manufacturer's server. A terminal can have one or more device identities.

Optionally, the performing, by the terminal, a related operation for activating and/or deactivating subscriber data based on the number of device identities of the terminal includes at least one of the following:
the terminal simultaneously activates subscriber data whose number is less than and/or equal to a total number of device identifiers of the terminal;
the terminal binds at most one device identity to one piece of subscriber data;
the terminal determines the number of subscriber data able to be activated simultaneously, based on the number of device identities of the terminal;
the terminal determines the number of remaining subscriber data able to be activated simultaneously, based on the number of idle device identities of the terminal;
the terminal presents, based on the number of device identities of the terminal, at least one of the following: the number of subscriber data able to be activated simultaneously; and the number of remaining subscriber data able to be activated simultaneously;
the terminal binds one device identity to each piece of activated subscriber data;
upon deactivation of one piece of subscriber data, the terminal releases binding of the subscriber data to a corresponding device identity; and
in a case that the terminal needs to activate second subscriber data and no idle device identity is available, the terminal deactivates first subscriber data.

The first subscriber data includes at least one of the following: already activated subscriber data; and subscriber data that has been bound to a device identity. In an embodiment, the first subscriber data can be subscriber data chosen by the terminal user to deactivate. The second subscriber data can be subscriber data that has not been activated.

In an embodiment, a device identity that has been unbound can be bound to other subscriber data.

In an embodiment, a device identity bound to one subscriber data cannot be bound to other subscriber data.

The binding of device identity to subscriber data includes at least one of the following: a terminal device identity corresponding to the subscriber data is the device identity; and in a case that the terminal accesses the network using the subscriber data, a terminal device identity provided to the network is the one bound to the subscriber data.

In an embodiment, idle device identities include device identities in the terminal that are not bound.

For example, in a case that no USIM is inserted in the USIM slot, the device identity corresponding to the slot can be considered idle.

For example, in a case that no electric SIM (eSIM) is downloaded for UICC, the device identity corresponding to the UICC can be considered idle.

In an embodiment, the idle device identity can be used for binding to a non-UICC type certificate and/or subscription.

Optionally, that the terminal determines the number of subscriber data able to be activated simultaneously, based on the number of device identities of the terminal includes at least one of the following:
the terminal determines a maximum number of subscriber data able to be activated simultaneously, based on the total number of device identities of the terminal.

The number of subscriber data able to be activated simultaneously by the terminal is less than and/or equal to the total number of device identities of the terminal.

In an embodiment, after the step of determining the number of subscriber data able to be activated simultaneously, at least one of the following is present: the number of subscriber data able to be activated simultaneously; and the total number of device identities;
and/or
after the step of determining the number of remaining subscriber data able to be activated simultaneously, at least one of the following is present: the number of remaining subscriber data able to be activated simultaneously; and the number of idle device identities.

In an embodiment, it is up to the user to choose which subscriber data to activate or deactivate.

Optionally, the subscriber data includes at least one of the following: UICC type subscriber data; non-UICC type subscriber data; and subscriber data stored on the terminal device.

Optionally, the device identity includes one of the following:
a device identity dedicated to non-UICC type subscriber data; and
a generic device identity for non-UICC subscriber data and UICC type subscriber data.

Optionally, the type of device identity includes at least one of the following: permanent equipment identifier (Permanent Equipment Identifier, PEI), international mobile station equipment identity (International Mobile station Equipment Identity, IMEI), and international mobile station equipment identity and software version number (International Mobile station Equipment Identity and Software Version number, IMEISv).

Optionally, the performing, by the terminal, a related operation for activating and/or deactivating subscriber data based on the number of device identities of the terminal includes at least one of the following: the terminal performs a related operation for activating and/or deactivating subscriber data based on the number of device identities under a first condition being satisfied, where the first condition includes at least one of the following:
the network requires device identity verification of the terminal; and
the number of subscriber data saved and/or inserted in the terminal exceeds the number of device identities of the terminal.

In an embodiment, that the network requires device identity verification of the terminal includes that a network corresponding to the subscriber data requires device identity verification of the terminal.

In an embodiment, the network corresponding to the subscriber data includes at least one of the following: a network accessed and/or registered using the subscriber data, and a subscribed network corresponding to the subscriber data.

Optionally, the method further includes at least one of the following:
receiving first indication information from the network, where the first indication information is used for indicating one of the following: a need for device identity verification of the terminal; and no need for device identity verification of the terminal;
receiving a registration denial reason from the network, where the registration denial reason is used for indicating that the terminal device is not invalid; and
receiving an identity request from the network, where the identity request is used for requesting the device identity of the terminal.

In an embodiment, the terminal may first attempt to register with the network, and in a case that the network requests the device identity of the terminal, the terminal can determine that the network requires device identity verification of the terminal.

In an embodiment, the terminal may first attempt to register with the network, and in a case that the terminal does not provide the device identity of the terminal to the network and/or receives a registration failure reason from the network, the registration failure reason being used to indicate that the terminal device is illegal, the terminal can determine that the network requires device identity verification of the terminal.

Optionally, activating subscriber data or subscriber data being activated includes at least one of the following:
the state of the subscriber data is valid or enabled;
the subscriber data is able to trigger the terminal to search for a network corresponding to the subscriber data;
the terminal is able to access or register on the network using the subscriber data;
the terminal accesses the network using the subscriber data and is in a registered state on the network;
the terminal accesses the network using the subscriber data and is in a state on the network other than a deregistered state caused by invalid subscriber data; and
a subscriber (such as UE) corresponding to the subscriber data is in a deregistered state on the network and the deregistered state excludes a deregistered state caused by invalid subscriber data;
   and/or
deactivating subscriber data or subscriber data being deactivated includes at least one of the following:
   the state of the subscriber data is invalid;
   the subscriber data is unable to trigger the terminal to search for a network corresponding to the subscriber data;
   the terminal accesses the network using the subscriber data and is in a deregistered state on the network or in a deregistered state caused by invalid subscriber data; and
   the subscriber (such as UE) corresponding to the subscriber data is in a deregistered state on the network, or the subscriber corresponding to the subscriber data is in a deregistered state on the network caused by invalid subscriber data.

In an embodiment, after the terminal deactivates subscriber data, it can still save the deactivated subscriber data without deleting it.

In an embodiment, that the terminal is able to access the network or register on the network using the subscriber data includes at least one of the following: the terminal is able to use the subscriber data to register with the network, a subscriber corresponding to the subscriber data is in a registered state on the network, and the terminal is able to use the subscriber data for network services.

Optionally, the subscriber data further includes at least one of the following: terminal subscriber identity, and information about a network corresponding to the subscriber data.

Optionally, the performing, by the terminal, a related operation for activating and/or deactivating subscriber data based on the number of device identities of the terminal includes at least one of the following:
the terminal performs a related operation for activating and/or deactivating non-UICC type subscriber data based on the number of non-UICC type device identities of the terminal; and
the terminal performs a related operation for activating and/or deactivating UICC type subscriber data based on the number of UICC type device identities of the terminal.

Optionally, a terminal performs a first operation upon determination that a second condition is satisfied; where the first operation includes at least one of the following:
binding a device identity to first subscriber data, and
sending the device identity to a first network.

The second condition includes at least one of the following:
the first subscriber data is subscriber data activated on the terminal,
the terminal uses the first subscriber data to access the first network,
the first network requires device identity verification of the terminal,
the device identity is a valid terminal device identity in the first network, and
the device identity is a device identity bound to the first subscriber data.

The subscriber data includes at least one of the following: a certificate and subscription data.

Optionally, the binding a device identity to first subscriber data includes: binding a valid terminal device identity in the first network to the first subscriber data in a scenario of accessing the first network.

Optionally, the subscriber data further includes at least one of the following: terminal subscriber identity, and information about a network corresponding to the subscriber data.

Optionally, the terminal performs a second operation upon determination that a third condition is satisfied.

The second operation includes at least one of the following:
setting a first device identity as an invalid device identity for a first network;
not binding a first device identity to first subscriber data;
prohibiting the use of the first subscriber data to access the first network in a case that the first device identity is bound to the first subscriber data;
deactivating the first subscriber data for a scenario involving residence and/or access to the first network in a case that the first device identity is bound to the first subscriber data;
releasing the binding of the first device identity to the first subscriber data in a case that the first device identity is already bound to the first subscriber data;
binding a second device identity to the first subscriber data; and
binding a device identity to the first subscriber data in a case that no device identity is bound to the first subscriber data.

The third condition includes one of the following: receiving first information from the first network, and determining that the first device identity is not a valid device identity for the first network.

The first information is used for indicating at least one of the following: the terminal device is invalid, and the device identity of the terminal is invalid; and
the subscriber data includes at least one of the following: a certificate and subscription data.

Optionally, the third condition further includes at least one of the following:
the terminal uses the first subscriber data to access the first network;
before receiving the first information from the first network, the terminal sends the first device identity to the first network;
the device identity bound to the first subscriber data is the first device identity; and
the terminal registers with the first network and the registration is non-emergency.

Optionally, the first device identity includes at least one of the following: a terminal device identity bound to the first subscriber data, a terminal device identity provided to the first network, and a terminal device identity determined as invalid by the first network;
and/or
the second device identity is a valid terminal device identity in the first network;
   and/or
in a case that no device identity is bound to the first subscriber data, the device identity bound to the first subscriber data is a valid terminal device identity in the first network.

Optionally, the setting a first device identity as an invalid device identity for a first network includes at least one of the following: prohibiting the use of the first device identity to access the first network; prohibiting the sending of the first device identity to the first network; and in a case that subscriber data is used to access the first network, prohibiting the binding of the first device identity to the subscriber data;
the not binding a first device identity to first subscriber data includes: for a scenario of accessing the first network using the first subscriber data, not binding the first device identity to the first subscriber data;
   and/or
the releasing the binding of the first device identity to the first subscriber data in a case that the first device identity is already bound to the first subscriber data includes: in a scenario of accessing the first network, in a case that the first device identity is already bound to the first subscriber data, releasing the binding of the first device identity to the first subscriber data;
   and/or
the binding a second device identity to the first subscriber data includes: for a scenario of accessing the first network, binding the second device identity to the first subscriber data;
   and/or
the binding a device identity to the first subscriber data in a case that no device identity is bound to the first subscriber data includes: for a scenario of accessing the first network, in a case that no device identity is bound to the first subscriber data, binding a device identity to the first subscriber data.

Optionally, the setting a first device identity as an invalid device identity for a first network is applicable only to a scenario of accessing the first network for non-emergency registration;
and/or
the scenario of accessing the first network does not include the scenario of emergency registration with the first network.

Optionally, the subscriber data further includes at least one of the following: terminal subscriber identity, and information about a network corresponding to the subscriber data.

It is not difficult to understand that this embodiment can support the network in conducting device identity verification of the terminal while reducing the waste of device identities.

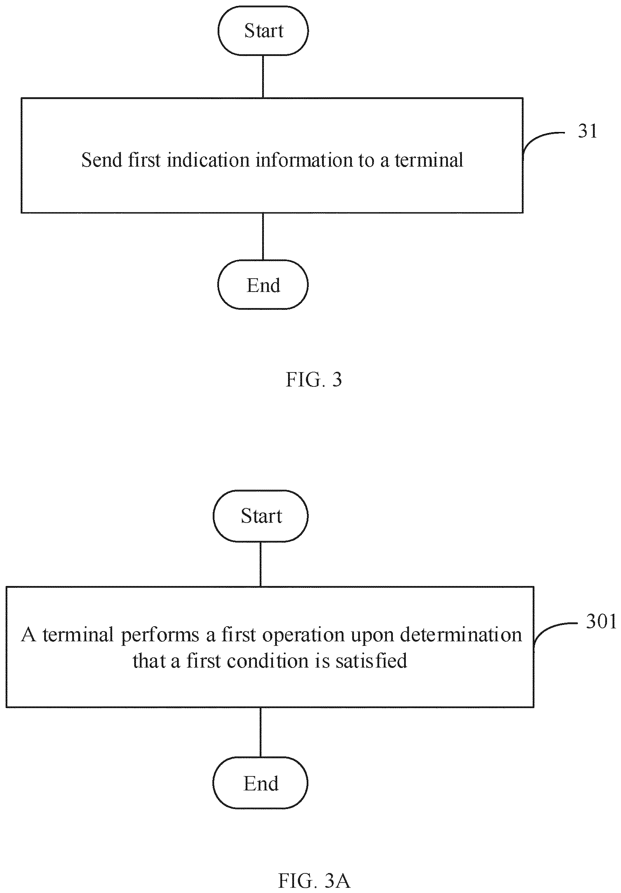

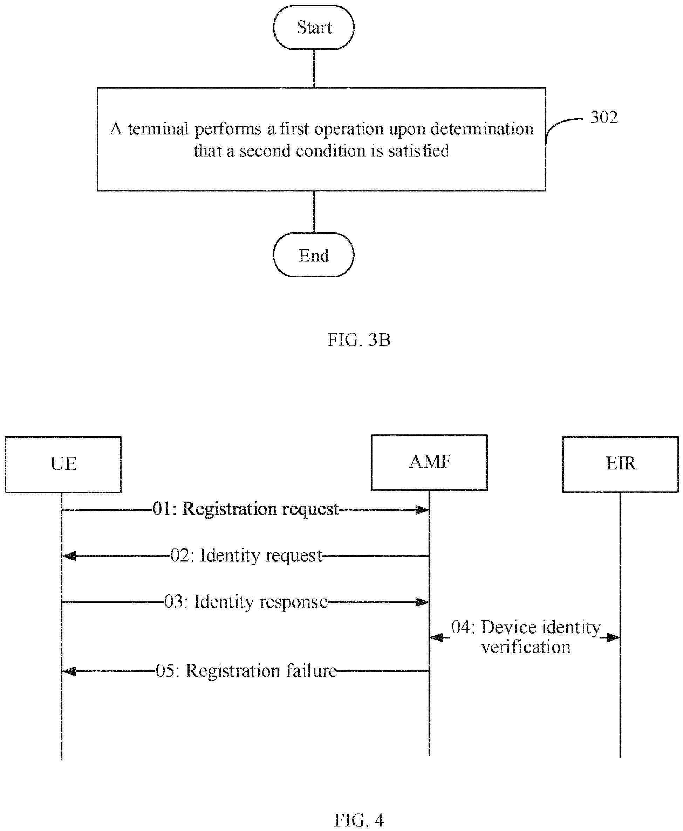

Refer to FIG. 3, which is a flowchart of an information processing method provided by an embodiment of this application. This method is applied to a network-side device (such as a CN element (for example, AMF or EIR), or a RAN element). As shown in FIG. 3, the method includes the following steps.

Step 31. Send first indication information to a terminal, where the first indication information is used for indicating one of the following: a need for device identity verification of the terminal; and no need for device identity verification of the terminal.

In a case that the network-side device is a RAN element, it can send the first indication information to the terminal through a system information broadcast (SIB). It is not difficult to understand that this embodiment can support the network in conducting device identity verification of the terminal while reducing the waste of device identities.

Refer to FIG. 3A, which is a flowchart of another information processing method provided by an embodiment of this application. This method is applied to a terminal (such as UE and ME). As shown in FIG. 3A, the method includes the following steps.

Step 301. A terminal performs a first operation upon determination that a second condition is satisfied.

The first operation includes at least one of the following:
binding a device identity to first subscriber data, and
sending the device identity to a first network.

The second condition includes at least one of the following:
the first subscriber data is subscriber data activated on the terminal,
the terminal uses the first subscriber data to access the first network,
the first network requires device identity verification of the terminal,
the device identity is a valid terminal device identity in the first network, and
the device identity is a device identity bound to the first subscriber data.

The subscriber data includes at least one of the following: a certificate and subscription data.

In an embodiment, a device identity is bound to the first subscriber data in a case that the second condition includes at least one of the following:
the first subscriber data is subscriber data activated on the terminal,
the terminal uses the first subscriber data to access the first network,
the first network requires device identity verification of the terminal, and
the device identity is a valid terminal device identity in the first network.

In an embodiment, a device identity is sent to the first network in a case that the second condition includes at least one of the following:
the first subscriber data is subscriber data activated on the terminal,
the terminal uses the first subscriber data to access the first network,
the first network requires device identity verification of the terminal,
the device identity is a valid terminal device identity in the first network, and
the device identity is a device identity bound to the first subscriber data.

Optionally, the binding a device identity to first subscriber data includes: binding a valid terminal device identity in the first network to the first subscriber data in a scenario of accessing the first network.

In an embodiment, the operation of binding a valid terminal device identity in the first network to the first subscriber data is effective in the scenario of accessing the first network. For example, in the scenario of accessing the second network, the device identity bound to the first subscriber data can be a valid terminal device identity in the second network.

Optionally, the subscriber data further includes at least one of the following: terminal subscriber identity, and information about a network corresponding to the subscriber data.

Refer to FIG. 3B, which is a flowchart of yet another information processing method according to an embodiment of this application. This method is applied to a terminal (such as UE and ME). As shown in FIG. 3B, the method includes the following steps.

Step 302. A terminal performs a second operation upon determination that a third condition is satisfied, where the second operation includes at least one of the following:
setting a first device identity as an invalid device identity for a first network;
not binding a first device identity to first subscriber data;
prohibiting the use of the first subscriber data to access the first network in a case that the first device identity is bound to the first subscriber data;
deactivating the first subscriber data for a scenario involving residence and/or access to the first network in a case that the first device identity is bound to the first subscriber data;
releasing the binding of the first device identity to the first subscriber data in a case that the first device identity is already bound to the first subscriber data;
binding a second device identity to the first subscriber data; and
binding a device identity to the first subscriber data in a case that no device identity is bound to the first subscriber data.

The third condition includes one of the following: receiving first information from the first network, and determining that the first device identity is not a valid device identity for the first network.

The first information is used for indicating at least one of the following: the terminal device is invalid, and the device identity of the terminal is invalid.

The subscriber data includes at least one of the following: a certificate and subscription data.

In an embodiment, the binding a second device identity to the first subscriber data includes changing the binding of the first subscriber data from the first device identity to the second device identity in a case that the first device identity has been bound to the first subscriber data.

Optionally, the third condition further includes at least one of the following:
the terminal uses the first subscriber data to access the first network;
before receiving the first information from the first network, the terminal sends the first device identity to the first network;
the device identity bound to the first subscriber data is the first device identity; and
the terminal registers with the first network and the registration is non-emergency.

Optionally, the first device identity includes at least one of the following: a terminal device identity bound to the first subscriber data, a terminal device identity provided to the first network, and a terminal device identity determined as invalid by the first network;
and/or
the second device identity is a valid terminal device identity in the first network;
   and/or
in a case that no device identity is bound to the first subscriber data, the device identity bound to the first subscriber data is a valid terminal device identity in the first network.

Optionally, the setting a first device identity as an invalid device identity for a first network includes at least one of the following: prohibiting the use of the first device identity to access the first network; prohibiting the sending of the first device identity to the first network; and in a case that subscriber data is used to access the first network, prohibiting the binding of the first device identity to the subscriber data;
the not binding a first device identity to first subscriber data includes: for a scenario of accessing the first network using the first subscriber data, not binding the first device identity to the first subscriber data;
   and/or
the releasing the binding of the first device identity to the first subscriber data in a case that the first device identity is already bound to the first subscriber data includes: in a scenario of accessing the first network, in a case that the first device identity is already bound to the first subscriber data, releasing the binding of the first device identity to the first subscriber data;
   and/or
the binding a second device identity to the first subscriber data includes: for a scenario of accessing the first network, binding the second device identity to the first subscriber data;
   and/or
the binding a device identity to the first subscriber data in a case that no device identity is bound to the first subscriber data includes: for a scenario of accessing the first network, in a case that no device identity is bound to the first subscriber data, binding a device identity to the first subscriber data.

Optionally, the setting a first device identity as an invalid device identity for a first network is applicable only to a scenario of accessing the first network for non-emergency registration;
and/or
the scenario of accessing the first network does not include the scenario of emergency registration with the first network.

In an embodiment, emergency registration is an exception. In non-emergency registration scenarios, the first device identity is an invalid terminal device identity in the first network. In emergency registration scenarios, the first device identity can still be used to access the first network.

Optionally, the subscriber data further includes at least one of the following: terminal subscriber identity, and information about a network corresponding to the subscriber data.

For ease of understanding, a specific implementation example is provided as follows: As shown in FIG. 4, the registration process triggered by the relevant terminal may include the following steps.

Step 01. The terminal uses the first subscriber data to send a registration request message to a network-side device (hereinafter described as an example with AMF).

Step 02. The AMF receives the mobile registration request message, and sends an identity request to the terminal, where the identity request is used to request a device identity of the terminal.

Step 03. In one approach, first subscriber data of the terminal does not have a device identity, and the terminal sends an identity response to the AMF, where the response message indicates no identity.

In another approach, the first subscriber data of the terminal has a device identity (that is, the first device identity), and the terminal sends an identity response to the AMF, where the response message includes the device identity bound to the subscriber data (such as the first device identity).

Step 04. When no identity is received, the AMF sends a registration rejection to the terminal, including a registration denial reason, where the registration denial reason is used to indicate that the terminal device is illegal.

When the device identity of the terminal is received, the AMF may request an EIR to verify the terminal device identity, and in a case that verification by the EIR fails, the AMF sends registration rejection to the terminal, including a registration denial reason, where the registration denial reason is used to indicate that the terminal device is illegal.

Thus, the terminal can determine that the network requires device identity verification of the terminal.

Additionally, the terminal can further perform a second operation, as described in the embodiment of FIG. 3B.

It should be noted that the information processing method provided by the embodiments of this application can be executed by an information processing apparatus, or by a control module within the information processing apparatus that is configured to execute the information processing method. The information processing apparatus executing the information processing method is used as an example to describe the information processing apparatus according to an embodiment of this application.

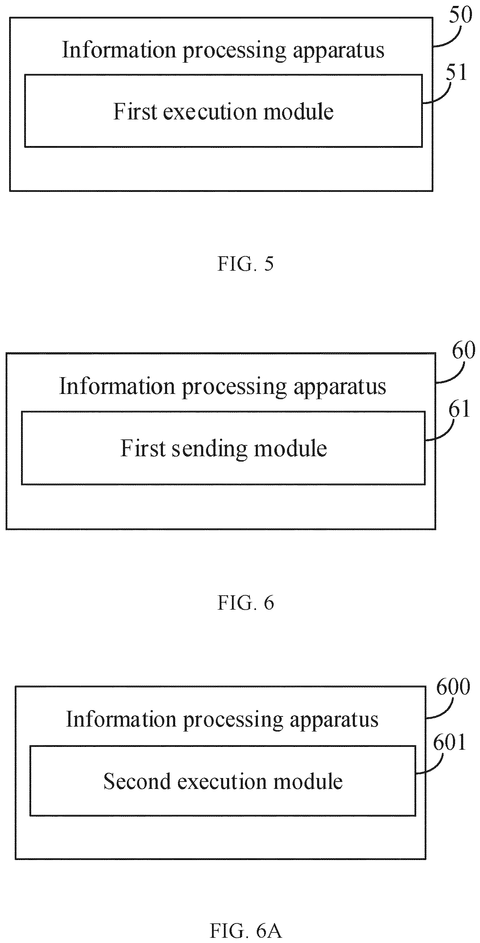

Refer to FIG. 5, which is a schematic structural diagram of an information processing apparatus provided by an embodiment of this application. As shown in FIG. 5, the information processing apparatus 50 includes:
a first execution module 51, configured to perform a related operation for activating and/or deactivating subscriber data based on the number of device identities of the terminal.

The subscriber data includes at least one of the following: a certificate and subscription data.

In an embodiment, the device identity of the terminal is pre-configured in the terminal or obtained from the terminal manufacturer's server. A terminal can have one or more device identities.

Optionally,
the first execution module is specifically configured to perform at least one of the following:
the number of subscriber data that simultaneously activated by the terminal is less than and/or equal to a total number of device identifiers of the terminal;
bind at most one device identity to one piece of subscriber data;
determine the number of subscriber data able to be activated simultaneously, based on the number of device identities of the terminal;
determine the number of remaining subscriber data able to be activated simultaneously, based on the number of idle device identities of the terminal;
present, based on the number of device identities of the terminal, at least one of the following: the number of subscriber data able to be activated simultaneously; and the number of remaining subscriber data able to be activated simultaneously;
bind one device identity to each piece of activated subscriber data;
upon deactivation of one piece of subscriber data, release binding of the subscriber data to a corresponding device identity; and
in a case that the terminal needs to activate second subscriber data and no idle device identity is available, deactivate first subscriber data.

The first subscriber data includes at least one of the following: already activated subscriber data; and subscriber data that has been bound to a device identity.

In an embodiment, the first subscriber data can be subscriber data chosen by the terminal user to deactivate. The second subscriber data can be subscriber data that has not been activated.

In an embodiment, a device identity that has been unbound can be bound to other subscriber data.

In an embodiment, a device identity bound to one subscriber data cannot be bound to other subscriber data.

The binding of device identity to subscriber data includes at least one of the following: a terminal device identity corresponding to the subscriber data is the device identity; and in a case that the terminal accesses the network using the subscriber data, a terminal device identity provided to the network is the one bound to the subscriber data.

In an embodiment, idle device identities include device identities in the terminal that are not bound.

For example, in a case that no USIM is inserted in the USIM slot, the device identity corresponding to the slot can be considered idle.

For example, in a case that no eSIM is downloaded for UICC, a device identity corresponding to the UICC can be considered idle.

In an embodiment, the idle device identity can be used for binding to a non-UICC type certificate and/or subscription.

Optionally, that the terminal determines the number of subscriber data able to be activated simultaneously, based on the number of device identities of the terminal includes at least one of the following:
the terminal determines a maximum number of subscriber data able to be activated simultaneously, based on the total number of device identities of the terminal.

The number of subscriber data able to be activated simultaneously by the terminal is less than and/or equal to the total number of device identities of the terminal.

In an embodiment, the apparatus further includes a presentation module.

The presentation module is configured to present at least one of the following: the number of subscriber data able to be activated simultaneously; and a total number of device identities;
and/or
the presentation module is configured to present at least one of the following: the number of remaining subscriber data able to be activated simultaneously; and the number of idle device identities.

In an embodiment, it is up to the user to choose which subscriber data to activate or deactivate.

Optionally, the subscriber data includes at least one of the following: UICC type subscriber data; non-UICC type subscriber data; and subscriber data stored on the terminal device.

Optionally, the device identity includes one of the following:
a device identity dedicated to non-UICC type subscriber data; and
a generic device identity for non-UICC subscriber data and UICC type subscriber data.

Optionally, the type of device identity includes at least one of the following: PEI; IMEI; and IMEISv.

Optionally, the first execution module is configured to perform activating and/or deactivating subscriber data based on the number of device identities under a first condition being satisfied; where the first condition includes at least one of the following:
the network requires device identity verification of the terminal; and
the number of subscriber data saved and/or inserted in the terminal exceeds the number of device identities of the terminal.

In an embodiment, that the network requires device identity verification of the terminal includes that a network corresponding to the subscriber data requires device identity verification of the terminal.

In an embodiment, the network corresponding to the subscriber data includes at least one of the following: a network accessed and/or registered using the subscriber data, and a subscribed network corresponding to the subscriber data.

Optionally, the apparatus further includes a receiving module.

The receiving module is configured to receive first indication information from the network, where the first indication information is used for indicating one of the following: a need for device identity verification of the terminal; and no need for device identity verification of the terminal;
and/or
the receiving module is configured to receive a registration denial reason from the network, where the registration denial reason is used for indicating that the terminal device is not valid;
   and/or
the receiving module is configured to receive an identity request from the network, where the identity request is used for requesting the device identity of the terminal.

In an embodiment, the terminal may first attempt to register with the network, and in a case that the network requests the device identity of the terminal, the terminal can determine that the network requires device identity verification of the terminal.

In an embodiment, the terminal may first attempt to register with the network, and in a case that the terminal does not provide the device identity of the terminal to the network and/or receives a registration failure reason from the network, the registration failure reason being used to indicate that the terminal device is illegal, the terminal can determine that the network requires device identity verification of the terminal.

Optionally, activating subscriber data or subscriber data being activated includes at least one of the following:
the state of the subscriber data is valid or enabled;
the subscriber data is able to trigger the terminal to search for a network corresponding to the subscriber data;
the terminal is able to access or register on the network using the subscriber data;
the terminal accesses the network using the subscriber data and is in a registered state on the network;
the terminal accesses the network using the subscriber data and is in a state on the network other than a deregistered state caused by invalid subscriber data; and
a subscriber corresponding to the subscriber data is in a deregistered state on the network and the deregistered state excludes a deregistered state caused by invalid subscriber data;
   and/or
deactivating subscriber data or subscriber data being deactivated includes at least one of the following:
   the state of the subscriber data is invalid;
   the subscriber data is unable to trigger the terminal to search for a network corresponding to the subscriber data;
   the terminal accesses the network using the subscriber data and is in a deregistered state on the network or in a deregistered state caused by invalid subscriber data; and
   the subscriber corresponding to the subscriber data is in a deregistered state on the network, or the subscriber corresponding to the subscriber data is in a deregistered state on the network caused by invalid subscriber data.

In an embodiment, after the terminal deactivates subscriber data, it can still save the deactivated subscriber data without deleting it.

In an embodiment, that the terminal is able to access the network or register on the network using the subscriber data includes at least one of the following: the terminal is able to use the subscriber data to register with the network, a subscriber corresponding to the subscriber data is in a registered state on the network, and the terminal is able to use the subscriber data for network services.

The performing, by the terminal, a related operation for activating and/or deactivating subscriber data based on the number of device identities of the terminal includes at least one of the following:
the terminal performs a related operation for activating and/or deactivating non-UICC type subscriber data based on the number of non-UICC type device identities of the terminal; and
the terminal performs a related operation for activating and/or deactivating UICC type subscriber data based on the number of UICC type device identities of the terminal.

Optionally, the subscriber data further includes at least one of the following: terminal subscriber identity, and information about a network corresponding to the subscriber data.

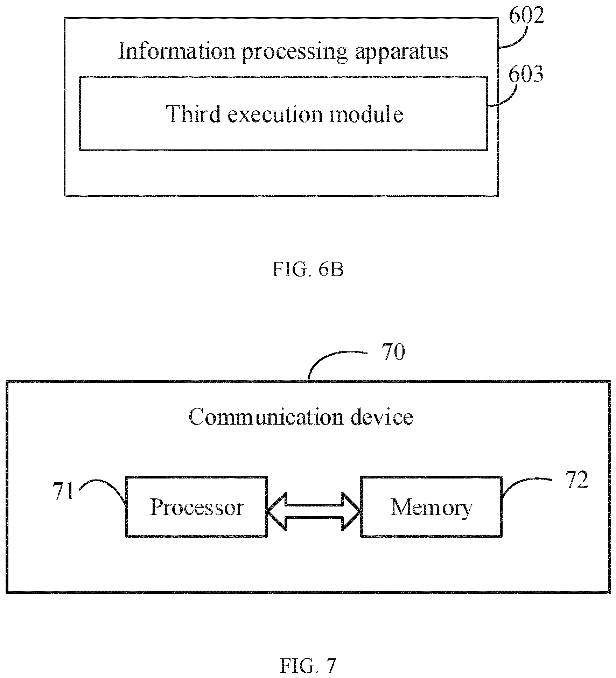

Refer to FIG. 6, which is a schematic structural diagram of another information processing apparatus provided by an embodiment of this application. As shown in FIG. 6, the information processing apparatus 60 includes:
a first sending module 61, where the first indication information is used for indicating one of the following: a need for device identity verification of the terminal, and no need for device identity verification of the terminal.

In the embodiments of this application, the information processing apparatus 60 is capable of implementing the various processes realized in the method embodiment shown in FIG. 3, with the same beneficial effects achieved. To avoid repetition, details are not described herein again.

Refer to FIG. 6A, which is a schematic structural diagram of an information processing apparatus provided by an embodiment of this application. As shown in FIG. 6A, the information processing apparatus 600 includes:
a second execution module configured to perform a first operation upon determination that a second condition is satisfied.

The first operation includes at least one of the following:
binding a device identity to first subscriber data, and
sending the device identity to a first network.

The second condition includes at least one of the following:
the first subscriber data is subscriber data activated on the terminal,
the terminal uses the first subscriber data to access the first network,
the first network requires device identity verification of the terminal,
the device identity is a valid terminal device identity in the first network, and
the device identity is a device identity bound to the first subscriber data; and
the subscriber data includes at least one of the following: a certificate and subscription data.

In an embodiment, a device identity is bound to the first subscriber data in a case that the second condition includes at least one of the following:
the first subscriber data is subscriber data activated on the terminal,
the terminal uses the first subscriber data to access the first network,
the first network requires device identity verification of the terminal, and
the device identity is a valid terminal device identity in the first network.

In an embodiment, a device identity is sent to the first network in a case that the second condition includes at least one of the following:
the first subscriber data is subscriber data activated on the terminal,
the terminal uses the first subscriber data to access the first network,
the first network requires device identity verification of the terminal,
the device identity is a valid terminal device identity in the first network, and
the device identity is a device identity bound to the first subscriber data.

Optionally, the binding a device identity to first subscriber data includes: binding a valid terminal device identity in the first network to the first subscriber data in a scenario of accessing the first network.

In an embodiment, the operation of binding a valid terminal device identity in the first network to the first subscriber data is effective in the scenario of accessing the first network. For example, in the scenario of accessing the second network, the device identity bound to the first subscriber data can be a valid terminal device identity in the second network.

Optionally, the subscriber data further includes at least one of the following: terminal subscriber identity, and information about a network corresponding to the subscriber data.

Refer to FIG. 6B, which is a schematic structural diagram of an information processing apparatus provided by an embodiment of this application. As shown in FIG. 6B, the information processing apparatus 602 includes:
a third execution module 603 configured to perform a second operation upon determination that a third condition is satisfied.

The second operation includes at least one of the following:
setting a first device identity as an invalid device identity for a first network;
not binding a first device identity to first subscriber data;
prohibiting the use of the first subscriber data to access the first network in a case that the first device identity is bound to the first subscriber data;
deactivating the first subscriber data for a scenario involving residence and/or access to the first network in a case that the first device identity is bound to the first subscriber data;
releasing the binding of the first device identity to the first subscriber data in a case that the first device identity is already bound to the first subscriber data;
binding a second device identity to the first subscriber data; and
binding a device identity to the first subscriber data in a case that no device identity is bound to the first subscriber data.

The third condition includes one of the following: receiving first information from the first network, and determining that the first device identity is not a valid device identity for the first network.

The first information is used for indicating at least one of the following: the terminal device is invalid, and the device identity of the terminal is invalid.

The subscriber data includes at least one of the following: a certificate and subscription data.

In an embodiment, the binding a second device identity to the first subscriber data includes changing the binding of the first subscriber data from the first device identity to the second device identity in a case that the first device identity has been bound to the first subscriber data.

Optionally, the third condition further includes at least one of the following:
the terminal uses the first subscriber data to access the first network;
before receiving the first information from the first network, the terminal sends the first device identity to the first network;
the device identity bound to the first subscriber data is the first device identity; and
the terminal registers with the first network and the registration is non-emergency.

Optionally, the first device identity includes at least one of the following: a terminal device identity bound to the first subscriber data, a terminal device identity provided to the first network, and a terminal device identity determined as invalid by the first network;
and/or
the second device identity is a valid terminal device identity in the first network;
   and/or
in a case that no device identity is bound to the first subscriber data, the device identity bound to the first subscriber data is a valid terminal device identity in the first network.

Optionally, the setting a first device identity as an invalid device identity for a first network includes at least one of the following: prohibiting the use of the first device identity to access the first network; prohibiting the sending of the first device identity to the first network; and in a case that subscriber data is used to access the first network, prohibiting the binding of the first device identity to the subscriber data;
the not binding a first device identity to first subscriber data includes: for a scenario of accessing the first network using the first subscriber data, not binding the first device identity to the first subscriber data;
   and/or
the releasing the binding of the first device identity to the first subscriber data in a case that the first device identity is already bound to the first subscriber data includes: in a scenario of accessing the first network, in a case that the first device identity is already bound to the first subscriber data, releasing the binding of the first device identity to the first subscriber data;
   and/or
the binding a second device identity to the first subscriber data includes: for a scenario of accessing the first network, binding the second device identity to the first subscriber data;
   and/or
the binding a device identity to the first subscriber data in a case that no device identity is bound to the first subscriber data includes: for a scenario of accessing the first network, in a case that no device identity is bound to the first subscriber data, binding a device identity to the first subscriber data.

Optionally, the setting a first device identity as an invalid device identity for a first network is applicable only to a scenario of accessing the first network for non-emergency registration;
and/or
the scenario of accessing the first network does not include the scenario of emergency registration with the first network.

In an embodiment, emergency registration is an exception. In non-emergency registration scenarios, the first device identity is an invalid terminal device identity in the first network. In emergency registration scenarios, the first device identity can still be used to access the first network.

Optionally, the subscriber data further includes at least one of the following: terminal subscriber identity, and information about a network corresponding to the subscriber data.

Optionally, as shown in FIG. 7, an embodiment of this application also provides a communication device 70 including a processor 71, a memory 72, and a program or instructions stored in the memory 72 and executable on the processor 71. When the program or instructions are executed by the processor 71, the processes in the foregoing information processing method embodiment are implemented with the same technical effects achieved. To avoid repetition, details are not further described now.

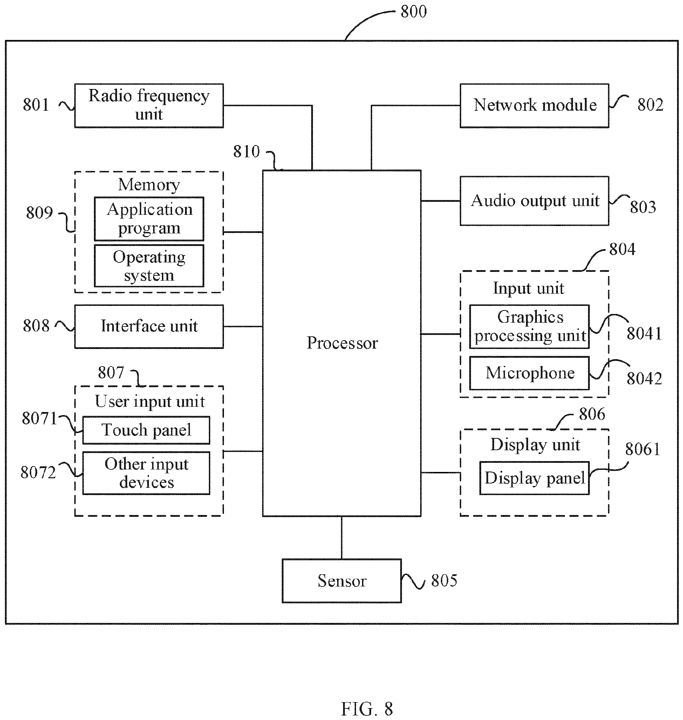

FIG. 8 is a schematic diagram of a hardware structure of a terminal 800 according to an embodiment of this application.

The terminal 800 includes but is not limited to components such as a radio frequency unit 801, a network module 802, an audio output unit 803, an input unit 804, a sensor 805, a display unit 806, a user input unit 807, an interface unit 808, a memory 809, and a processor 810.

It can be understood by those skilled in the art that the terminal 800 may further include a power supply (for example, a battery) supplying power to the components. The power supply may be logically connected to the processor 810 via a power management system, so that functions such as charge management, discharge management, and power consumption management are implemented by using the power management system. The structure of the terminal shown in FIG. 8 does not constitute a limitation on the terminal. The terminal may include more or fewer components than illustrated in the figure, or combine some components, or have a different component arrangement. Details are not described herein.

It should be understood that in this embodiment of this application, the input unit 804 may include a graphics processing unit (Graphics Processing Unit, GPU) 8041 and a microphone 8042. The graphics processing unit 8041 processes image data of a static picture or a video that is obtained by an image capture apparatus (for example, a camera) in a video capture mode or an image capture mode. The display unit 806 may include a display panel 8061. The display panel 8061 may be configured in a form of a liquid crystal display, an organic light-emitting diode display, or the like. The user input unit 807 includes a touch panel 8061 and another input device 8072. The touch panel 8061 is also referred to as a touchscreen. The touch panel 8061 may include two parts: a touch detection apparatus and a touch controller. The other input devices 8072 may include but are not limited to a physical keyboard, a function button (such as a volume control button or a power button), a trackball, a mouse, and a joystick. Details are not described herein.

In this embodiment of this application, the radio frequency unit 801 transmits downlink data received from a network-side device to the processor 810 for processing, and in addition, transmits uplink data to the network-side device. Generally, the radio frequency unit 801 includes but is not limited to an antenna, at least one amplifier, a transceiver, a coupler, a low noise amplifier, a duplexer, and the like.

The memory 809 may be configured to store software programs or instructions and various data. The memory 809 may include a program or instruction storage area and a data storage area. The program or instruction storage area may store an operating system, an application program or instructions required by at least one function (for example, sound play function or image play function), and the like. In addition, the memory 809 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 810 may include one or more processing units. Optionally, the processor 810 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 810.

The processor 810 is further configured to perform a related operation for activating and/or deactivating subscriber data based on the number of device identities of the terminal, where the subscriber data includes at least one of the following: a certificate and subscription data.

Optionally, the processor 810 is specifically configured to perform at least one of the following:
the number of subscriber data that simultaneously activated by the terminal is less than and/or equal to a total number of device identifiers of the terminal;
bind at most one device identity to one piece of subscriber data;
determine the number of subscriber data able to be activated simultaneously, based on the number of device identities of the terminal;
determine the number of remaining subscriber data able to be activated simultaneously, based on the number of idle device identities of the terminal;
present, based on the number of device identities of the terminal, at least one of the following: the number of subscriber data able to be activated simultaneously; and the number of remaining subscriber data able to be activated simultaneously;
bind one device identity to each piece of activated subscriber data;
upon deactivation of one piece of subscriber data, release binding of the subscriber data to a corresponding device identity; and
in a case that the terminal needs to activate second subscriber data and no idle device identity is available, the terminal deactivates first subscriber data.

The first subscriber data includes at least one of the following: already activated subscriber data; and subscriber data that has been bound to a device identity.

Optionally, the determining the number of subscriber data able to be activated simultaneously, based on the number of device identities of the terminal includes at least one of the following:
determine a maximum number of subscriber data able to be activated simultaneously, based on the total number of device identities of the terminal.

The number of subscriber data able to be activated simultaneously by the terminal is less than and/or equal to the total number of device identities of the terminal.

Optionally, the display unit 806 is configured to present at least one of the following: the number of subscriber data able to be activated simultaneously; and the total number of device identities the number of subscriber data able to be activated simultaneously; and the total number of device identities.
and/or
the display unit 806 is configured to present at least one of the following: the number of remaining subscriber data able to be activated simultaneously; and the number of idle device identities.

Optionally, the subscriber data includes at least one of the following: UICC type subscriber data; non-UICC type subscriber data; and subscriber data stored on the terminal device.

Optionally, the device identity includes one of the following:
a device identity dedicated to non-UICC type subscriber data; and
a generic device identity for non-UICC subscriber data and UICC type subscriber data.

Optionally, the type of device identity includes at least one of the following: PEI; IMEI; and IMEISv.

Optionally, the processor 810 is configured to perform a related operation for activating and/or deactivating subscriber data based on the number of device identities under a first condition being satisfied, where the first condition includes at least one of the following:
the network requires device identity verification of the terminal; and
the number of subscriber data saved and/or inserted in the terminal exceeds the number of device identities of the terminal.

Optionally, the radio frequency unit 801 is configured to receive first indication information from the network, where the first indication information is used for indicating one of the following: a need for device identity verification of the terminal; and no need for device identity verification of the terminal;
and/or
the radio frequency unit 801 is configured to receive a registration denial reason from the network, where the registration denial reason is used for indicating that the terminal device is not invalid; and
   and/or
the radio frequency unit 801 is configured to receive an identity request from the network, where the identity request is used for requesting the device identity of the terminal.

Optionally,
activating subscriber data or subscriber data being activated includes at least one of the following:
the state of the subscriber data is valid or enabled;
the subscriber data is able to trigger the terminal to search for a network corresponding to the subscriber data;
the terminal is able to access or register on the network using the subscriber data;
the terminal accesses the network using the subscriber data and is in a registered state on the network;
the terminal accesses the network using the subscriber data and is in a state on the network other than a deregistered state caused by invalid subscriber data; and
a subscriber corresponding to the subscriber data is in a deregistered state on the network and the deregistered state excludes a deregistered state caused by invalid subscriber data;
   and/or
deactivating subscriber data or subscriber data being deactivated includes at least one of the following:
   the state of the subscriber data is invalid;
   the subscriber data is unable to trigger the terminal to search for a network corresponding to the subscriber data;
   the terminal accesses the network using the subscriber data and is in a deregistered state on the network or in a deregistered state caused by invalid subscriber data; and
   the subscriber corresponding to the subscriber data is in a deregistered state on the network, or the subscriber corresponding to the subscriber data is in a deregistered state on the network caused by invalid subscriber data.

Optionally, the subscriber data further includes at least one of the following: terminal subscriber identity, and information about a network corresponding to the subscriber data.

Optionally, the processor 810 is configured for a terminal to perform a first operation upon determination that a second condition is satisfied.

The first operation includes at least one of the following:
binding a device identity to first subscriber data, and
sending the device identity to a first network.

The second condition includes at least one of the following:
the first subscriber data is subscriber data activated on the terminal,
the terminal uses the first subscriber data to access the first network,
the first network requires device identity verification of the terminal,
the device identity is a valid terminal device identity in the first network, and
the device identity is a device identity bound to the first subscriber data; and
the subscriber data includes at least one of the following: a certificate and subscription data.

Optionally, the binding a device identity to first subscriber data includes: binding a valid terminal device identity in the first network to the first subscriber data in a scenario of accessing the first network.

Optionally, the subscriber data further includes at least one of the following: terminal subscriber identity, and information about a network corresponding to the subscriber data.

Optionally, the processor 810 is configured to perform a second operation upon determination that a third condition is satisfied, where the second operation includes at least one of the following:
setting a first device identity as an invalid device identity for a first network;
not binding a first device identity to first subscriber data;
prohibiting the use of the first subscriber data to access the first network in a case that the first device identity is bound to the first subscriber data;
deactivating the first subscriber data for a scenario involving residence and/or access to the first network in a case that the first device identity is bound to the first subscriber data;
releasing the binding of the first device identity to the first subscriber data in a case that the first device identity is already bound to the first subscriber data;
binding a second device identity to the first subscriber data; and
binding a device identity to the first subscriber data in a case that no device identity is bound to the first subscriber data.

The third condition includes one of the following: receiving first information from the first network, and determining that the first device identity is not a valid device identity for the first network.

The first information is used for indicating at least one of the following: the terminal device is invalid, and the device identity of the terminal is invalid.

The subscriber data includes at least one of the following: a certificate and subscription data.

Optionally, the third condition further includes at least one of the following:
the terminal uses the first subscriber data to access the first network;
before receiving the first information from the first network, the terminal sends the first device identity to the first network;
the device identity bound to the first subscriber data is the first device identity; and
the terminal registers with the first network and the registration is non-emergency.

Optionally, the first device identity includes at least one of the following: a terminal device identity bound to the first subscriber data, a terminal device identity provided to the first network, and a terminal device identity determined as invalid by the first network;
and/or
the second device identity is a valid terminal device identity in the first network;
   and/or
in a case that no device identity is bound to the first subscriber data, the device identity bound to the first subscriber data is a valid terminal device identity in the first network.

Optionally, the setting a first device identity as an invalid device identity for a first network includes at least one of the following: prohibiting the use of the first device identity to access the first network; prohibiting the sending of the first device identity to the first network; and in a case that subscriber data is used to access the first network, prohibiting the binding of the first device identity to the subscriber data.

The not binding a first device identity to first subscriber data includes: for a scenario of accessing the first network using the first subscriber data, not binding the first device identity to the first subscriber data;
and/or
the releasing the binding of the first device identity to the first subscriber data in a case that the first device identity is already bound to the first subscriber data includes: in a scenario of accessing the first network, in a case that the first device identity is already bound to the first subscriber data, releasing the binding of the first device identity to the first subscriber data;
   and/or
the binding a second device identity to the first subscriber data includes: for a scenario of accessing the first network, binding the second device identity to the first subscriber data;
   and/or
the binding a device identity to the first subscriber data in a case that no device identity is bound to the first subscriber data includes: for a scenario of accessing the first network, in a case that no device identity is bound to the first subscriber data, binding a device identity to the first subscriber data.

Optionally, the setting a first device identity as an invalid device identity for a first network is applicable only to a scenario of accessing the first network for non-emergency registration;
and/or
the scenario of accessing the first network does not include the scenario of emergency registration with the first network.

The terminal 800 provided by the embodiments of this application is capable of implementing the various processes of the information processing method embodiments shown in FIG. 2, FIG. 3A, or FIG. 3B, with the same technical effects achieved. To avoid repetition, details are not described herein again.

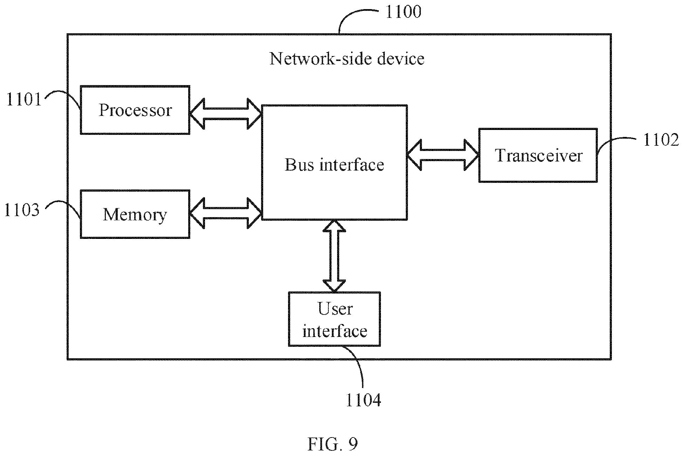

An embodiment of this application further provides a network-side device. As shown in FIG. 9, the network-side device 1100 includes a processor 1101, a transceiver 1102, a memory 1103, a user interface 1104, and a bus interface.

The network-side device 1100 in this embodiment of this application further includes instructions or a program stored in the memory 1103 and capable of running on the processor 1101. The processor 94 invokes the instructions or program in the memory 1101 to execute the method executed by the modules shown in FIG. 3, with the same technical effects achieved. To avoid repetition, details are not described herein again.

In FIG. 9, a bus architecture may include any quantity of interconnected buses and bridges, and specifically connect together various circuits of one or more processors represented by the processor 1101 and a memory represented by the memory 1103. The bus architecture may further interconnect various other circuits such as a peripheral device, a voltage regulator, and a power management circuit. These are all well known in the art, and therefore are not further described in this specification. The bus interface provides an interface. The transceiver 1102 may be a plurality of elements, including a transmitter and a receiver, and provides units configured to perform communication with various other apparatuses over a transmission medium. For different user equipment, the user interface 1104 may also be an interface capable of externally or internally connecting a required device, and the connected device includes but is not limited to a keypad, a display, a speaker, a microphone, a joystick, and the like.

The processor 1101 is responsible for management of the bus architecture and general processing, and the memory 1103 may store data for use by the processor 1101 when the processor 601 performs an operation.

An embodiment of this application also provides a readable storage medium having a program or instructions stored thereon. When the program or instructions are executed by the processor, the processes in the foregoing information processing method embodiment are implemented with the same technical effects achieved. To avoid repetition, details are not further described now.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application also provides a chip including a processor and a communication interface. The communication interface is coupled with the processor, and the processor is configured to execute the program or instructions to implement the processes in the foregoing information processing method embodiment with the same technical effects achieved. To avoid repetition, details are not further described now.

It should be understood that the chip mentioned in an embodiment of this application may also be referred to as a system-level chip, a system chip, a chip system, a system-on-chip, or the like.

An embodiment of this application further provides a computer program product, where the computer program product is stored in a non-volatile storage medium. The computer program product is executed by at least one processor to implement the processes of the foregoing information processing method embodiment, with the same technical effects achieved. To avoid repetition, details are not described herein again.

It should be noted that in this specification, the terms "comprise" and "include", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

According to the description of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred embodiment. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network-side device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other forms without departing from the principle of this application and the protection scope of the claims, and all such forms fall within the protection scope of this application.

## Claims

1. An information processing method, comprising:
performing, by a terminal, a related operation for activating and/or deactivating subscriber data based on the number of device identities of the terminal; wherein
the subscriber data comprises at least one of the following: a certificate and subscription data.

2. The method according to claim 1, wherein the performing, by the terminal, a related operation for activating and/or deactivating subscriber data based on the number of device identities of the terminal comprises at least one of the following:
the number of subscriber data that simultaneously activated by the terminal is less than and/or equal to a total number of device identifiers of the terminal;
the terminal binds at most one device identity to one piece of subscriber data;
the terminal determines the number of subscriber data able to be activated simultaneously, based on the number of device identities of the terminal;
the terminal determines the number of remaining subscriber data able to be activated simultaneously, based on the number of idle device identities of the terminal;
the terminal presents, based on the number of device identities of the terminal, at least one of the following: the number of subscriber data able to be activated simultaneously; and the number of remaining subscriber data able to be activated simultaneously;
the terminal binds one device identity to each piece of activated subscriber data;
upon deactivation of one piece of subscriber data, the terminal releases binding of the subscriber data to a corresponding device identity; and
in a case that the terminal needs to activate second subscriber data and no idle device identity is available, the terminal deactivates first subscriber data; wherein
the first subscriber data comprises at least one of the following: already activated subscriber data; and subscriber data that has been bound to a device identity.

3. The method according to claim 2, wherein that the terminal determines the number of subscriber data able to be activated simultaneously, based on the number of device identities of the terminal comprises at least one of the following:
the terminal determines a maximum number of subscriber data able to be activated simultaneously, based on the total number of device identities of the terminal; wherein
the number of subscriber data able to be activated simultaneously by the terminal is less than and/or equal to the total number of device identities of the terminal.

4. The method according to claim 2, wherein
after the step of determining the number of subscriber data able to be activated simultaneously, at least one of the following is present: the number of subscriber data able to be activated simultaneously; and the total number of device identities;
and/or
after the step of determining the number of remaining subscriber data able to be activated simultaneously, at least one of the following is present: the number of remaining subscriber data able to be activated simultaneously; and the number of idle device identities.

5. The method according to any one of claims 1 to 4, wherein the subscriber data comprises at least one of the following: UICC type subscriber data; non-UICC type subscriber data; and subscriber data stored on the terminal device.

6. The method according to any one of claims 1 to 4, wherein the device identity comprises one of the following:
a device identity dedicated to non-UICC type subscriber data; and
a generic device identity for non-UICC subscriber data and UICC type subscriber data.

7. The method according to any one of claims 1 to 4, wherein the type of device identity comprises at least one of the following: permanent equipment identifier PEI; international mobile equipment identity IMEI; and international mobile equipment identity and software version IMEISv.

8. The method according to any one of claims 1 to 4, wherein the performing, by the terminal, a related operation for activating and/or deactivating subscriber data based on the number of device identities of the terminal comprises at least one of the following:
the terminal performs a related operation for activating and/or deactivating subscriber data based on the number of device identities under a first condition being satisfied;
wherein the first condition comprises at least one of the following:
the network requires device identity verification of the terminal; and
the number of subscriber data saved and/or inserted in the terminal exceeds the number of device identities of the terminal.

9. The method according to claims 1 or 8, wherein the method further comprises at least one of the following:
receiving first indication information from the network, wherein the first indication information is used for indicating one of the following: a need for device identity verification of the terminal; and no need for device identity verification of the terminal;
receiving a registration denial reason from the network, wherein the registration denial reason is used for indicating that the terminal device is not invalid; and
receiving an identity request from the network, wherein the identity request is used for requesting the device identity of the terminal.

10. The method according to any one of claims 1 to 9, wherein:
activating subscriber data or subscriber data being activated comprises at least one of the following:
the state of the subscriber data is valid or enabled;
the subscriber data is able to trigger the terminal to search for a network corresponding to the subscriber data;
the terminal is able to access or register on the network using the subscriber data;
the terminal accesses the network using the subscriber data and is in a registered state on the network;
the terminal accesses the network using the subscriber data and is in a state on the network other than a deregistered state caused by invalid subscriber data; and
a subscriber corresponding to the subscriber data is in a deregistered state on the network and the deregistered state excludes a deregistered state caused by invalid subscriber data;
and/or
deactivating subscriber data or subscriber data being deactivated comprises at least one of the following:
the state of the subscriber data is invalid;
the subscriber data is unable to trigger the terminal to search for a network corresponding to the subscriber data;
the terminal accesses the network using the subscriber data and is in a deregistered state on the network or in a deregistered state caused by invalid subscriber data; and
the subscriber corresponding to the subscriber data is in a deregistered state on the network, or the subscriber corresponding to the subscriber data is in a deregistered state on the network caused by invalid subscriber data.

11. The method according to any one of claims 1 to 4, wherein:
the subscriber data further comprises at least one of the following: terminal subscriber identity, and information about a network corresponding to the subscriber data.

12. The method according to any one of claims 1 to 4, wherein the performing, by the terminal, a related operation for activating and/or deactivating subscriber data based on the number of device identities of the terminal comprises at least one of the following:
the terminal performs a related operation for activating and/or deactivating non-UICC type subscriber data based on the number of non-UICC type device identities of the terminal; and
the terminal performs a related operation for activating and/or deactivating UICC type subscriber data based on the number of UICC type device identities of the terminal.

13. An information processing method, applied to a network-side device, comprising:
sending first indication information to a terminal, wherein the first indication information is used for indicating one of the following: a need for device identity verification of the terminal; and no need for device identity verification of the terminal.

14. An information processing apparatus, comprising:
a first execution module configured to perform activating and/or deactivating subscriber data based on the number of device identities of a terminal; wherein
the subscriber data comprises at least one of the following: a certificate and subscription data.

15. The apparatus according to claim 14, wherein the first execution module is specifically configured to perform at least one of the following:
the number of subscriber data that simultaneously activated by the terminal is less than and/or equal to a total number of device identifiers of the terminal;
bind at most one device identity to one piece of subscriber data;
determine the number of subscriber data able to be activated simultaneously, based on the number of device identities of the terminal;
determine the number of remaining subscriber data able to be activated simultaneously, based on the number of idle device identities of the terminal;
present, based on the number of device identities of the terminal, at least one of the following: the number of subscriber data able to be activated simultaneously; and the number of remaining subscriber data able to be activated simultaneously;
bind one device identity to each piece of activated subscriber data;
upon deactivation of one piece of subscriber data, release binding of the subscriber data to a corresponding device identity; and
in a case that the terminal needs to activate second subscriber data and no idle device identity is available, deactivate first subscriber data; wherein
the first subscriber data comprises at least one of the following: already activated subscriber data; and subscriber data that has been bound to a device identity.

16. The apparatus according to claim 15, wherein the determining the number of subscriber data able to be activated simultaneously, based on the number of device identities of the terminal comprises at least one of the following:
determine a maximum number of subscriber data able to be activated simultaneously, based on the total number of device identities of the terminal; wherein
the number of subscriber data able to be activated simultaneously by the terminal is less than and/or equal to the total number of device identities of the terminal.

17. The apparatus according to claim 15, wherein the apparatus further comprises a presentation module, wherein:
the presentation module is configured to present at least one of the following: the number of subscriber data able to be activated simultaneously; and a total number of device identities;
and/or
the presentation module is configured to present at least one of the following: the number of remaining subscriber data able to be activated simultaneously; and the number of idle device identities.

18. The apparatus according to any one of claims 14 to 17, wherein the subscriber data comprises at least one of the following: UICC type subscriber data; non-UICC type subscriber data; and subscriber data stored on the terminal device.

19. The apparatus according to any one of claims 14 to 17, wherein the device identity comprises one of the following:
a device identity dedicated to non-UICC type subscriber data; and
a generic device identity for non-UICC subscriber data and UICC type subscriber data.

20. The apparatus according to any one of claims 14 to 17, wherein the type of device identity comprises at least one of the following: PEI; IMEI; and IMEISv.

21. The apparatus according to any one of claims 14 to 17, wherein the first execution module is configured to perform activating and/or deactivating subscriber data based on the number of device identities under a first condition being satisfied; wherein the first condition comprises at least one of the following:
the network requires device identity verification of the terminal; and
the number of subscriber data saved and/or inserted in the terminal exceeds the number of device identities of the terminal.

22. The apparatus according to claim 14 or 21, wherein the apparatus further comprises a receiving module;
the receiving module is configured to receive first indication information from the network, wherein the first indication information is used for indicating one of the following: a need for device identity verification of the terminal; and no need for device identity verification of the terminal;
and/or
the receiving module is configured to receive a registration denial reason from the network, wherein the registration denial reason is used for indicating that the terminal device is not valid;
and/or
the receiving module is configured to receive an identity request from the network, wherein the identity request is used for requesting the device identity of the terminal.

23. The apparatus according to any one of claims 14 to 21, wherein:
activating subscriber data or subscriber data being activated comprises at least one of the following:
the state of the subscriber data is valid or enabled;
the subscriber data is able to trigger the terminal to search for a network corresponding to the subscriber data;
the terminal is able to access or register on the network using the subscriber data;
the terminal accesses the network using the subscriber data and is in a registered state on the network;
the terminal accesses the network using the subscriber data and is in a state on the network other than a deregistered state caused by invalid subscriber data; and
a subscriber corresponding to the subscriber data is in a deregistered state on the network and the deregistered state excludes a deregistered state caused by invalid subscriber data;
and/or
deactivating subscriber data or subscriber data being deactivated comprises at least one of the following:
the state of the subscriber data is invalid;
the subscriber data is unable to trigger the terminal to search for a network corresponding to the subscriber data;
the terminal accesses the network using the subscriber data and is in a deregistered state on the network or in a deregistered state caused by invalid subscriber data; and
the subscriber corresponding to the subscriber data is in a deregistered state on the network, or the subscriber corresponding to the subscriber data is in a deregistered state on the network caused by invalid subscriber data.

24. The apparatus according to any one of claims 14 to 17, wherein the subscriber data further comprises at least one of the following: terminal subscriber identity, and information about the network corresponding to the subscriber data.

25. An information processing apparatus, comprising:
a first sending module, wherein the first indication information is used for indicating one of the following: a need for device identity verification of the terminal; and no need for device identity verification of the terminal.

26. An information processing method, comprising:
performing, by a terminal, a first operation upon determination that a second condition is satisfied; wherein
the first operation comprises at least one of the following:
binding a device identity to first subscriber data, and
sending the device identity to a first network; wherein
the second condition comprises at least one of the following:
the first subscriber data is subscriber data activated on the terminal,
the terminal uses the first subscriber data to access the first network,
the first network requires device identity verification of the terminal,
the device identity is a valid terminal device identity in the first network, and
the device identity is a device identity bound to the first subscriber data; and
the subscriber data comprises at least one of the following: a certificate and subscription data.

27. The method according to claim 26, wherein the binding a device identity to first subscriber data comprises: binding a valid terminal device identity in the first network to the first subscriber data in a scenario of accessing the first network.

28. The method according to claim 26 or 27, wherein the subscriber data further comprises at least one of the following: terminal subscriber identity, and information about a network corresponding to the subscriber data.

29. An information processing method, comprising:
performing, by a terminal, a second operation upon determination that a third condition is satisfied; wherein
the second operation comprises at least one of the following:
setting a first device identity as an invalid device identity for a first network;
not binding a first device identity to first subscriber data;
prohibiting the use of the first subscriber data to access the first network in a case that the first device identity is bound to the first subscriber data;
deactivating the first subscriber data for a scenario involving residence and/or access to the first network in a case that the first device identity is bound to the first subscriber data;
releasing the binding of the first device identity to the first subscriber data in a case that the first device identity is already bound to the first subscriber data;
binding a second device identity to the first subscriber data; and
binding a device identity to the first subscriber data in a case that no device identity is bound to the first subscriber data; wherein
the third condition comprises one of the following: receiving first information from the first network, and determining that the first device identity is not a valid device identity for the first network; wherein
the first information is used for indicating at least one of the following: the terminal device is invalid, and the device identity of the terminal is invalid; and
the subscriber data comprises at least one of the following: a certificate and subscription data.

30. The method according to claim 29, wherein the third condition further comprises at least one of the following:
the terminal uses the first subscriber data to access the first network;
before receiving the first information from the first network, the terminal sends the first device identity to the first network;
the device identity bound to the first subscriber data is the first device identity; and
the terminal registers with the first network and the registration is non-emergency.

31. The method according to claim 29 or 30, wherein the first device identity comprises at least one of the following: a terminal device identity bound to the first subscriber data, a terminal device identity provided to the first network, and a terminal device identity determined as invalid by the first network;
and/or
the second device identity is a valid terminal device identity in the first network; and/or
in a case that no device identity is bound to the first subscriber data, the device identity bound to the first subscriber data is a valid terminal device identity in the first network.

32. The method according to claim 29 or 30, wherein:
the setting a first device identity as an invalid device identity for a first network comprises at least one of the following: prohibiting the use of the first device identity to access the first network; prohibiting the sending of the first device identity to the first network; and in a case that subscriber data is used to access the first network, prohibiting the binding of the first device identity to the subscriber data;
the not binding a first device identity to first subscriber data comprises: for a scenario of accessing the first network using the first subscriber data, not binding the first device identity to the first subscriber data;
and/or
the releasing the binding of the first device identity to the first subscriber data in a case that the first device identity is already bound to the first subscriber data comprises: in a scenario of accessing the first network, in a case that the first device identity is already bound to the first subscriber data, releasing the binding of the first device identity to the first subscriber data;
and/or
the binding a second device identity to the first subscriber data comprises: for a scenario of accessing the first network, binding the second device identity to the first subscriber data;
and/or
the binding a device identity to the first subscriber data in a case that no device identity is bound to the first subscriber data comprises: for a scenario of accessing the first network, in a case that no device identity is bound to the first subscriber data, binding a device identity to the first subscriber data.

33. The method according to claim 29 or 30, wherein the setting a first device identity as an invalid device identity for a first network is applicable only to a scenario of accessing the first network for non-emergency registration;
and/or
the scenario of accessing the first network does not comprise the scenario of emergency registration with the first network.

34. The method according to claim 29 or 30, wherein the subscriber data further comprises at least one of the following: terminal subscriber identity, and information about a network corresponding to the subscriber data.

35. An information processing apparatus, wherein the apparatus comprises a second execution module; wherein
the second execution module is configured for a terminal to perform a first operation upon determination that a second condition is satisfied; wherein
the first operation comprises at least one of the following:
binding a device identity to first subscriber data, and
sending the device identity to a first network; wherein
the second condition comprises at least one of the following:
the first subscriber data is subscriber data activated on the terminal,
the terminal uses the first subscriber data to access the first network,
the first network requires device identity verification of the terminal,
the device identity is a valid terminal device identity in the first network,
the device identity is a device identity bound to the first subscriber data; and
the subscriber data comprises at least one of the following: a certificate and subscription data.

36. The apparatus according to claim 35, wherein the binding a device identity to first subscriber data comprises: in a scenario of accessing the first network, binding a valid terminal device identity in the first network to the first subscriber data.

37. The apparatus according to claim 35 or 36, wherein the subscriber data further comprises at least one of the following: terminal subscriber identity, and information about a network corresponding to the subscriber data.

38. An information processing apparatus, wherein the apparatus comprises a third execution module; wherein
the third execution module is configured for a terminal to perform a second operation upon determination that a third condition is satisfied, wherein the second operation comprises at least one of the following:
setting a first device identity as an invalid device identity for a first network;
not binding a first device identity to first subscriber data;
prohibiting the use of the first subscriber data to access the first network in a case that the first device identity is bound to the first subscriber data;
deactivating the first subscriber data for a scenario involving residence and/or access to the first network in a case that the first device identity is bound to the first subscriber data;
releasing the binding of the first device identity to the first subscriber data in a case that the first subscriber data has already been bound to the first device identity;
binding a second device identity to the first subscriber data; and
binding a device identity to the first subscriber data in a case that no device identity is bound to the first subscriber data; wherein
the third condition comprises one of the following: receiving first information from the first network, and determining that the first device identity is not a valid device identity for the first network; wherein
the first information is used for indicating at least one of the following: the terminal device is invalid, and the device identity of the terminal is invalid; and
the subscriber data comprises at least one of the following: a certificate and subscription data.

39. The apparatus according to claim 38, wherein the third condition further comprises at least one of the following:
the terminal uses the first subscriber data to access the first network;
before receiving the first information from the first network, the terminal sends the first device identity to the first network;
the device identity bound to the first subscriber data is the first device identity; and
the terminal registers with the first network and the registration is non-emergency.

40. The apparatus according to claim 38 or 39, wherein the first device identity comprises at least one of the following: a terminal device identity bound to the first subscriber data, a terminal device identity provided to the first network, and a terminal device identity determined as invalid by the first network;
and/or
the second device identity is a valid terminal device identity in the first network; and/or
in a case that no device identity is bound to the first subscriber data, the device identity bound to the first subscriber data is a valid terminal device identity in the first network.

41. The apparatus according to claim 38 or 39, wherein the setting a first device identity as an invalid device identity for a first network comprises at least one of the following: prohibiting the use of the first device identity to access the first network; prohibiting the sending of the first device identity to the first network; and in a case that subscriber data is used to access the first network, prohibiting the binding of the first device identity to the subscriber data;
the not binding a first device identity to first subscriber data comprises: for a scenario of accessing the first network using the first subscriber data, not binding the first device identity to the first subscriber data;
and/or
the releasing the binding of the first device identity to the first subscriber data in a case that the first device identity is already bound to the first subscriber data comprises: in a scenario of accessing the first network, in a case that the first device identity is already bound to the first subscriber data, releasing the binding of the first device identity to the first subscriber data;
and/or
the binding a second device identity to the first subscriber data comprises: for a scenario of accessing the first network, binding the second device identity to the first subscriber data;
and/or
the binding a device identity to the first subscriber data in a case that no device identity is bound to the first subscriber data comprises: for a scenario of accessing the first network, in a case that no device identity is bound to the first subscriber data, binding a device identity to the first subscriber data.

42. The apparatus according to claim 38 or 39, wherein the setting a first device identity as an invalid device identity for a first network is applicable only to a scenario of accessing the first network for non-emergency registration;
and/or
the scenario of accessing the first network does not comprise the scenario of emergency registration with the first network.

43. A terminal, comprising a processor, a memory, and a program or instructions stored in the memory and capable of running on the processor, wherein when the program or instructions are executed by the processor, the steps of the information processing method according to any one of claims 1 to 12 are implemented, or the steps of the information processing method according to any one of claims 26 to 28 are implemented, or the steps of the information processing method according to any one of claims 29 to 34 are implemented.

44. A network-side device, comprising a processor, a memory, and a program or instructions stored in the memory and capable of running on the processor, wherein when the program or instructions are executed by the processor, the steps of the information processing method according to any one of claim 13 are implemented.

45. A readable storage medium, wherein the readable storage medium stores a program or instructions, and when the program or instructions are executed by a processor, the steps of the information processing method according to any one of claims 1 to 12 are implemented, or the step of the information processing method according to claim 1 3 is implemented, or the steps of the information processing method according to any one of claims 26 to 28 are implemented, or the steps of the information processing method according to any one of claims 29 to 34 are implemented.

46. A chip, comprising a processor and a communication interface, wherein the communication interface is coupled to the processor, and the processor is configured to run a program or instructions to implement to implement the steps of the information processing method according to any one of claims 1 to 12, or the step of the information processing method according to claim 13, or the steps of the information processing method according to any one of claims 26 to 28, or the steps of the information processing method according to any one of claims 29 to 34.

47. A computer program product, wherein the computer program product is stored in a non-volatile storage medium, and the computer program product is executed by at least one processor to implement the steps of the information processing method according to any one of claims 1 to 12, or the step of the information processing method according to claim 13, or the steps of the information processing method according to any one of claims 26 to 28, or the steps of the information processing method according to any one of claims 29 to 34.

48. A communication device, configured to execute the steps of the information processing method according to any one of claims 1 to 12, or the step of the information processing method according to claim 13, or the steps of the information processing method according to any one of claims 26 to 28, or the steps of the information processing method according to any one of claims 29 to 34.
